# EUROPEAN PATENT APPLICATION

(11) **EP 4 844 210 A1**
(43) Date of publication of application: **25.11.2026**
(21) Application number: 26180414.0
(22) Date of filing: 21.05.2026
(51) Int. Cl.: F02C 7/047, F02C 7/14, F02K 5/00, B64D 27/33

(54) **HYBRID ELECTRIC PROPULSION SYSTEM FOR AN AIRCRAFT WITH NACELLE INLET ANTI-ICING AN METHOD FOR OPERATION THE SAME**

(30) Priority: 21.05.2025 US 202519215006
(71) Applicant: RTX Corporation, Farmington, CT 06032 (US)
(72) Inventor: YAZICI, Murat, Glastonbury (US); MORTON, Jeffrey T., Glastonbury (US)
(74) Representative: Dehns

(57) **Abstract**

A hybrid electric propulsion (HEP) system (18) for an aircraft is provided that comprises a gas turbine engine (20), an electric power system, a first thermal management system (TMS), a second TMS, and a controller (90). The gas turbine engine is disposed in a nacelle having an annular inlet compartment (48). The electric power system comprises an electric motor. The first TMS is in communication with the gas turbine engine, and comprises a first heat exchanger in communication with the inlet compartment. The second TMS is in communication with the electric power system, and comprises a second heat exchanger in communication with the inlet compartment. The controller is in communication with the first TMS, the second TMS, and a non-transitory memory storing instructions. The instructions when executed cause the controller to control at least one of the first TMS or the second TMS to transfer thermal energy into the inlet compartment.

## Description

### BACKGROUND OF THE INVENTION

### 1. Technical Field

The present disclosure relates to hybrid electric propulsion systems for aircraft in general and to hybrid electric propulsion systems with nacelle anti-icing systems and methods in particular.

### 2. Background Information

Thermal management is critical in the operation of most gas turbine engines. The system performing the thermal management (i.e., the "thermal management system" or "TMS") is typically tasked with transferring thermal energy from engine components such as engine bearing compartments, gearboxes, drive gears, and the like. Hybrid Electric Propulsion (HEP) systems that extract power from both the low spool of the engine and the high spool often have additional heat transfer challenges that are difficult to accommodate with a TMS that is common to a gas turbine propulsion system alone.

### SUMMARY

According to an aspect of the present disclosure, a hybrid electric propulsion (HEP) system for an aircraft is provided that comprises a gas turbine engine, an electric power system, a first thermal management system (TMS), a second TMS, and a controller. The gas turbine engine comprises a compressor section, a combustion section, a turbine section, and a spool connecting the compressor section and the turbine section. The gas turbine engine is disposed in a nacelle having an inlet within an annular inlet compartment. The electric power system comprises an electric motor that is disposable in a drive configuration for producing rotational drive and in a power configuration for producing electrical power. The first TMS is in communication with the gas turbine engine, and comprises a first heat exchanger in communication with the inlet compartment. The second TMS is in communication with the electric power system, and comprises a second heat exchanger in communication with the inlet compartment. The controller is in communication with the first TMS, the second TMS, and a non-transitory memory storing instructions. The instructions when executed cause the controller to control at least one of the first TMS or the second TMS to transfer thermal energy into the inlet compartment during operation of the HEP system.

In any of the aspects or embodiments described above and herein, the instructions when executed may cause the controller to control both the first TMS and the second TMS to transfer thermal energy into the inlet compartment during operation of the HEP system.

In any of the aspects or embodiments described above and herein, during operation of the HEP system the electric motor produces an electric component thermal energy, and the second TMS may be configured to transfer the electric component thermal energy to a first fluid, and the second heat exchanger may be configured to transfer the electric component thermal energy away from the first fluid.

In any of the aspects or embodiments described above and herein, the inlet compartment may be configured to contain an airflow. The nacelle may include an inlet port and an exhaust port, and the inlet port and the exhaust port may be configured such that during operation of the HEP system, the airflow enters the inlet compartment through the inlet port and exits the inlet compartment through the exhaust port.

In any of the aspects or embodiments described above and herein, the second heat exchanger may be disposed within the inlet compartment.

In any of the aspects or embodiments described above and herein, the inlet compartment may be defined by a wall panel, and the second heat exchanger may include a plurality of conduits disposed within the wall panel.

In any of the aspects or embodiments described above and herein, the first TMS may be configured to collect a first thermal energy produced by the gas turbine engine during operation of the HEP system and transfer the first thermal energy to a first fluid, and the second TMS may be configured to collect a second thermal energy produced by the electric motor during operation of the HEP system and transfer the second thermal energy to a second fluid, and the instructions when executed may cause the controller to control the first TMS and the second TMS.

In any of the aspects or embodiments described above and herein, the instructions when executed may cause the controller to control the first TMS and the second TMS to transfer the thermal energy into the inlet compartment.

In any of the aspects or embodiments described above and herein, the thermal energy transferred into the inlet compartment is adequate for anti-icing operations.

According to an aspect of the present disclosure, a method of eliminating ice build-up on the inlet of a aircraft engine nacelle that houses a hybrid electric propulsion (HEP) system is provided. The HEP system comprises a gas turbine engine and an electric power system that comprises an electric motor. The method comprises: providing a first thermal management system (TMS) configured to cool first components within the gas turbine engine, wherein the first TMS includes a first heat exchanger in communication with an inlet compartment of the nacelle; providing a second TMS to cool second components within the electric power system, including the electric motor, wherein the second TMS includes a second heat exchanger in communication with the inlet compartment; operating the electric motor in a drive configuration to produce rotational drive for the HEP system, or operating the electric motor in a power configuration to produce electrical power; and operating at least one of the first TMS or the second TMS to transfer an amount of thermal energy into the inlet compartment that eliminates ice build-up on the inlet of the aircraft engine nacelle.

In any of the aspects or embodiments described above and herein, the step of operating at least one of the first TMS or the second TMS may include operating both the first TMS and the second TMS to collectively transfer the amount of thermal energy within the inlet compartment that eliminates ice build-up on the inlet of the aircraft engine nacelle.

In any of the aspects or embodiments described above and herein, the method may include operating the first TMS to cool the first components within the gas turbine engine, and the first components may include bearings.

In any of the aspects or embodiments described above and herein, the step of operating the first TMS to cool the first components within the gas turbine engine may include cycling an engine oil through the first components.

In any of the aspects or embodiments described above and herein, the step of operating the first TMS may include varying a first volumetric flow of the engine oil through the first heat exchanger.

In any of the aspects or embodiments described above and herein, the method may include operating the second TMS to cool the second components within the electric power system, and the aforesaid operating may include cycling a coolant to engage with the second components.

In any of the aspects or embodiments described above and herein, the step of operating the second TMS may include varying a second volumetric flow of the coolant through the second heat exchanger.

According to an aspect of the present disclosure, a hybrid electric propulsion (HEP) system for an aircraft is provided that comprises a gas turbine engine, an electric power system, a first thermal management system (TMS), a second TMS, and a controller. The gas turbine engine comprises a compressor section, a combustion section, and a turbine section. The gas turbine engine is disposed in a nacelle having an inlet within an annular inlet compartment. The electric power system comprises an electric motor that is disposable in a drive configuration for producing rotational drive and in a power configuration for producing electrical power. The first thermal management system (TMS) is in communication with the gas turbine engine. The first TMS comprises a first heat exchanger, and is configured to selectively transfer thermal energy into the inlet compartment. The second TMS is in communication with the electric power system, and comprises a second heat exchanger disposed in the inlet compartment. The controller is in communication with the first TMS, the second TMS, and a non-transitory memory storing instructions. The instructions when executed cause the controller to control at least one of the first TMS or the second TMS to transfer thermal energy into the inlet compartment during operation of the HEP system.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic view of a hybrid electric propulsion (HEP) system embodiment that includes a gas turbine engine, an electric power system, a thermal management system for the gas turbine engine, and a thermal management system for the electric power system.
FIG. 2 is a diagrammatic view of an engine thermal management system.
FIG. 3 is a diagrammatic view of an electric power system thermal management system.
FIG. 4 is a diagram of an engine thermal management system and an electric power system thermal management system engaged with an inlet compartment of a nacelle structure.
FIG. 5 is a diagram of an engine thermal management system and an electric power system thermal management system engaged with an inlet compartment of a nacelle structure.

### DETAILED DESCRIPTION

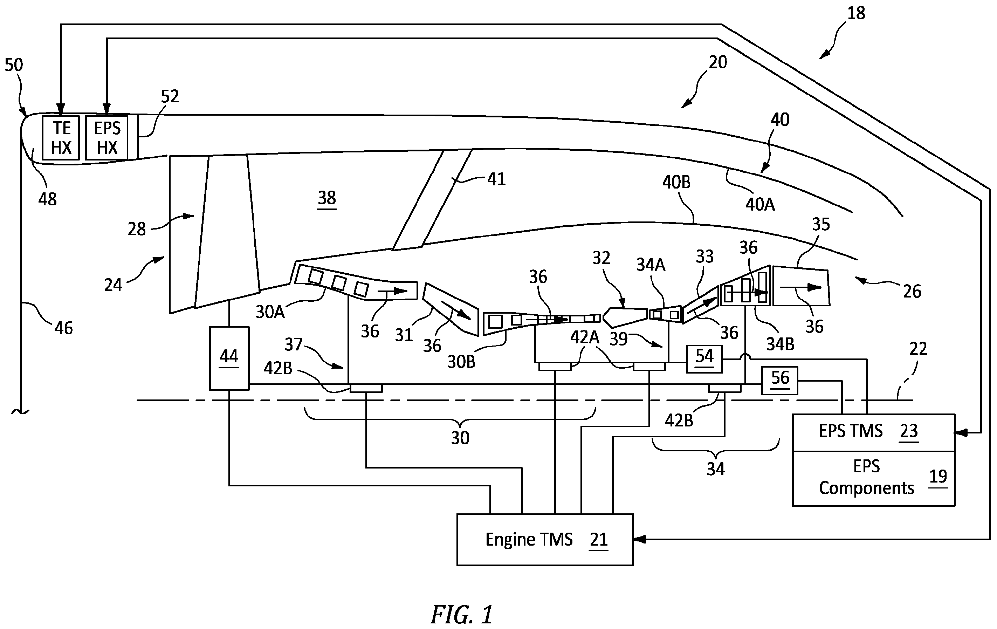

FIG. 1 diagrammatically illustrates a hybrid electric propulsion (HEP) system 18 that includes a gas turbine engine 20, electric power system components ("EPS components 19"), a thermal management system ("Engine TMS 21") for the gas turbine engine, and a thermal management system ("EPS TMS 23") for the EPS components 19.

The gas turbine engine 20 diagrammatically shown in FIG. 1 extends along an axial centerline 22 between an upstream airflow inlet 24 and a downstream exhaust 26. The gas turbine engine 20 includes a fan section 28, a compressor section 30, a combustion section 32, and a turbine section 34. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A and the LPT 34B are connected to one another as part of a low pressure spool (LP spool 37). The HPC 30B and the HPT 34A are connected to one another as part of a high pressure spool (HP spool 39). A first pair of bearings 42A are diagrammatically shown supporting the HP spool 39 and a second pair of bearings 42B are diagrammatically shown supporting the LP spool 37. A geared architecture 44 is diagrammatically shown engaged with the fan section 28 driven by a fan shaft that is in communication with the LP spool 37.

Air entering the gas turbine engine 20 through the airflow inlet 24 (forward of the fan section 28) is split between a core gas path 36 and a fan bypass air path 38. The core gas path 36 extends through the LPC 30A, the intermediate case 31, the HPC 30B, the combustion section 32, the HPT 34A, the mid-turbine frame 33, the LPT 34B, and the turbine exhaust case 35. Core gas exiting the LPT 34B exits the engine 20 via the exhaust 26. The remainder of the air entering the gas turbine engine 20 passes through the fan section 28 and enters the fan bypass air path 38 which is disposed radially outside of the core of the engine 20. The gas turbine engine 20 is diagrammatically shown in FIG. 1 engaged with a nacelle structure 40.

The nacelle structure 40 is configured to provide an annular region radially outside of the core of the gas turbine engine 20. The annular region (which serves as the fan bypass air path 38) is defined by an outer radial structure 40A and an inner radial structure 40B. In some embodiments, a fan exit guide vane (FEGV 41) extends between the inner radial structure 40B and the outer radial structure 40A. The outer radial structure 40A defines the outer radial boundary of the fan bypass air path 38 and the inner radial structure 40B defines the inner radial boundary of the fan bypass air path 38.

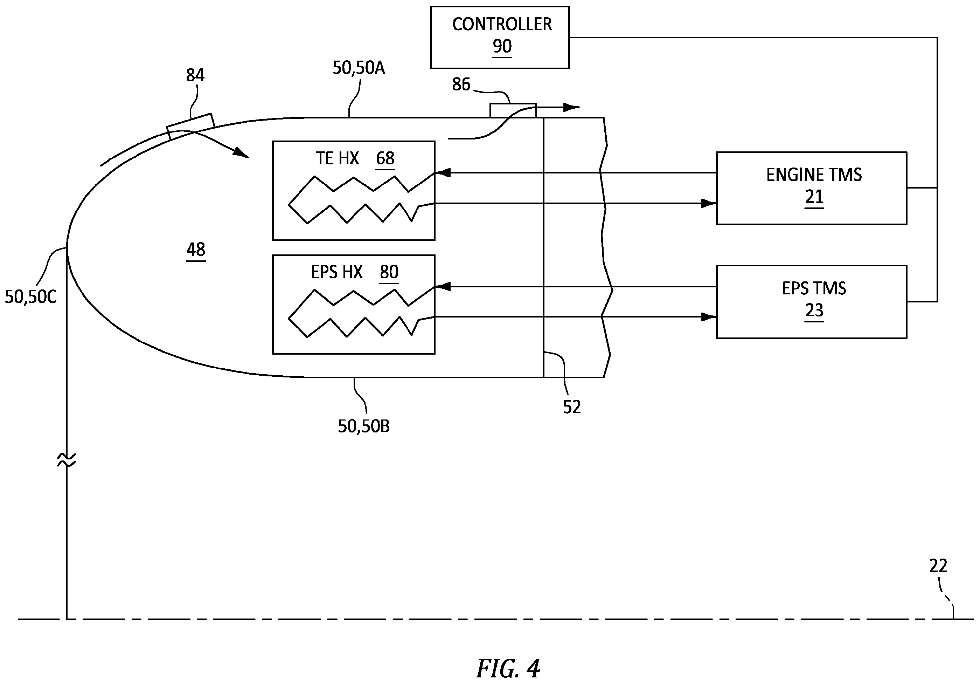

The forwardmost portion of the outer radial structure 40A of the nacelle structure defines the inlet 46 to the nacelle structure 40 and includes an annular compartment that may be referred to as the inlet compartment 48. The inlet compartment 48 is disposed upstream of the fan section 28 and is defined by a wall panel 50. To facilitate the description herein, the wall panel 50 will be defined as including an exterior wall panel portion 50A, an interior wall panel portion 50B, and a leading edge wall panel portion 50C (e.g., see FIG. 4) that extends between the exterior and interior wall panel portions 50A, 50B. The interface between the leading edge wall panel portion 50C and the exterior wall panel portion 50A and the interface between the leading edge wall panel portion 50C and the interior wall panel portion 50B may be arbitrarily chosen. In some embodiments, an aft end of the inlet compartment 48 may be defined by a structural member 52 that extends between the exterior wall panel portion 50A and the interior wall panel portion 50B. The inlet compartment 48 may be an annular structure that defines the inlet of the nacelle structure 40.

The gas turbine engine 20 configuration diagrammatically shown in FIG. 1 is an example provided to facilitate the description herein. The present disclosure may be implemented in a variety of different gas turbine engine configurations and is not therefore limited to the gas turbine engine 20 configuration diagrammatically shown in FIG. 1. For example, embodiments of the present disclosure may be utilized with gas turbine engines having a reverse flow architecture or with gas turbine engines having one spool or more than two spools.

The terms "forward" and "aft" are used herein to indicate the relative position of a component or surface. In an axial engine such as that shown in FIG. 1, the fan section 28 is forward of the compressor section 30 and the turbine section 34 is aft of the compressor section 30. The terms "inner radial" and "outer radial" refer to relative radial positions from the engine centerline 22. An inner radial component or path is disposed radially closer to the engine centerline 22 than an outer radial component or path.

In the HEP system 18 embodiment shown in FIG. 1, the EPS components 19 include a first electric motor / generator 54 in selective drive communication with the HP spool 39 and a second electric motor / generator 56 in selective drive communication with the LP spool 37. The present disclosure HEP system 18 does not require two electric motor / generators be included; e.g., the HEP system 18 may include a single electric motor / generator or may include more than two electric motor / generators. Each electric motor / generator may be an alternating current (AC) motor that is disposable in a drive configuration for producing rotational drive for driving a component, or disposed in a power configuration for producing electrical power. In the drive configuration, an electric motor / generator 54, 56 may be disposed to provide rotational drive directly to the gas turbine engine 20 or may be disposed to provide rotational drive to a gearbox that in turn provides rotational drive to the gas turbine engine 20 or to a propulsion unit; e.g., a propulsion unit that includes a propeller, or a rotor, or the like.

In addition to the electric motor / generators 54, 56, the EPS components 19 may include additional components such as a motor control unit (MCU) configured to control an electric motor / generator 54, 56, an electrical energy storage unit (e.g., a battery) that may be used to store electrical energy, an electrical energy storage unit management system, and the like. FIG. 1 diagrammatically illustrates the EPS components 19 using a labeled box and diagrammatically illustrating the electric motor / generators 54, 56. EPS components 19 may be disposed in various locations; e.g., electric motor / generators 54, 56 engaged with the engine 20, MCUs located external to the engine 20 such as within the nacelle structure 40, and the like. The present disclosure is not limited to EPS components 19 located in particular locations.

In some HEP system 18 embodiments, a gearbox or other gear configuration (not shown) may be utilized with an electric motor / generator 54, 56 to alter the rotational speed and/or the torque of the electric motor/generator 54, 56.

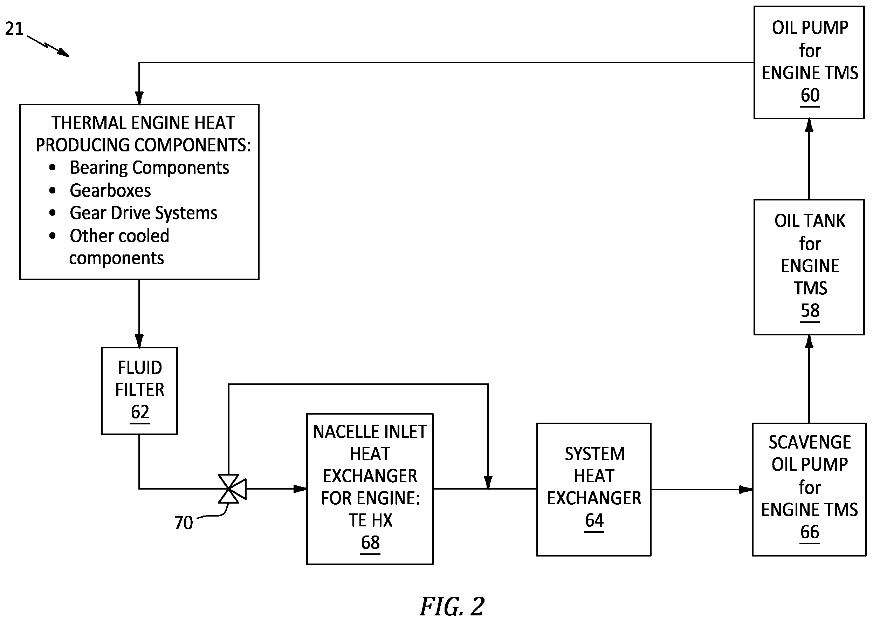

FIG. 2 diagrammatically illustrates an Engine TMS 21 as a closed loop system that is configured for use with the gas turbine engine 20. The Engine TMS 21 is configured to pass a fluid through certain engine components to cool and/or lubricate those components. Fluids (referred to hereinafter as "engine oil") that may be used within the Engine TMS 21 are well known and the present disclosure is not limited to any particular type of engine oil. Non-limiting examples of engine components serviced by the Engine TMS 21 include bearing compartments, gearboxes, fan drive gear systems, and the like.

The Engine TMS 21 diagrammatically shown in FIG. 2 includes an oil tank 58, an oil pump 60, a fluid filter 62, a system heat exchanger 64, a scavenge oil pump 66, and a nacelle inlet heat exchanger ("TE HX 68"). Other Engine TMS 21 embodiments may include fewer system components, more system components, or different system components. The oil tank 58 is a reservoir that holds a sufficient quantity of engine oil for the requirements of the gas turbine engine 20. The oil pump 60 may be a mechanical pump (e.g., a positive displacement pump driven by a gearbox or the like), or an electromechanical pump, or the like. An example of a system heat exchanger 64 that may be used is an air/oil heat exchanger that is configured to transfer thermal energy from the engine oil to a flow of air (e.g., compressor bleed air or bypass air), or a fuel/oil heat exchanger that is configured to transfer thermal energy from the engine oil to a flow of the fuel that is subsequently combusted within the gas turbine engine 20. The Engine TMS 21 is configured to collect engine oil from the various engine components serviced by the Engine TMS 21 and return that engine oil to the oil tank 58 where it can be used again to cycle through the Engine TMS 21. In those embodiments of the present disclosure HEP system 18 that include a scavenge oil pump 66, the scavenge oil pump 66 may be disposed to pump engine oil scavenged from engine components back to the oil tank 58 where it can be used again to cycle through the Engine TMS 21. In some embodiments, the nacelle inlet heat exchanger ("TE HX 68") may be disposed in communication with the nacelle structure inlet compartment 48 and will be detailed herein. In some embodiments, the TE HX 68 may be disposed elsewhere (e.g., elsewhere in the nacelle, or in a pylon, or the like) and therefore not disposed in communication with the nacelle structure inlet compartment 48. A bypass valve 70 may be included to control the flow of engine oil through the TE HX 68. For example, the bypass valve 70 may be disposed in a closed configuration wherein all of the engine oil flow within the Engine TMS 21 is directed around the TE HX 68, or in a partially open configuration wherein some portion of the engine oil flow within the Engine TMS 21 is directed around the TE HX 68 and the remainder of the engine oil flow passes through the TE HX 68, or in a fully open configuration wherein all of the engine oil flow within the Engine TMS 21 is directed through the TE HX 68.

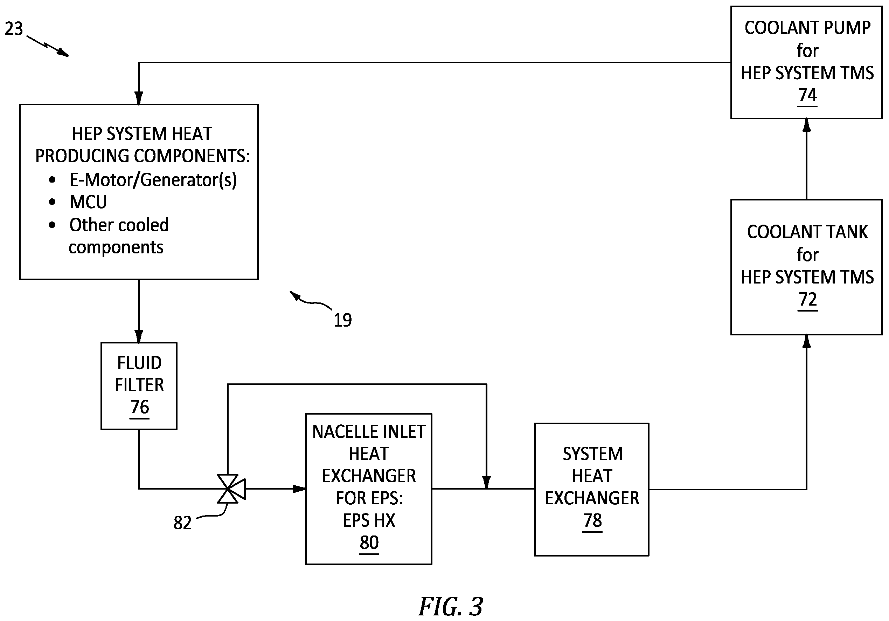

FIG. 3 diagrammatically illustrates an example of an EPS TMS 23 that is configured to cool EPS components 19. The EPS TMS 23 is configured to directly or indirectly engage the EPS components 19 with a fluid coolant. As the fluid coolant passes through or otherwise engages with the respective EPS components 19, thermal energy is transferred from the EPS component 19 to the fluid coolant and is thereby removed. A glycol-based fluid is a non-limiting example of a coolant that may be used within the EPS TMS 23. The present disclosure is not limited to any particular type of coolant.

The EPS TMS 23 diagrammatically shown in FIG. 3 as a closed loop system that includes a coolant tank 72, a coolant pump 74, a fluid filter 76, a system heat exchanger 78, and a nacelle inlet heat exchanger ("EPS HX 80"). This example of an EPS TMS 23 configuration is not intended to be limiting. Other EPS TMS 23 embodiments may include fewer EPS components, more EPS components, or different EPS components. In some embodiments, for example, the EPS HX 80 may itself be adequate to satisfy the cooling requirements of the EPS components 19, and the system heat exchanger 78 may be omitted. The coolant tank 72 is a reservoir that holds a sufficient quantity of coolant for the requirements of the EPS components 19. The coolant pump 74 may be a mechanical pump (e.g., a positive displacement pump driven by a gearbox or the like), or an electromechanical pump, or the like. An example of a system heat exchanger 78 that may be used in the EPS TMS 23 is an air/coolant heat exchanger that is configured to transfer thermal energy from the coolant to a flow of air (e.g., bypass air) disposed at a lower temperature than the coolant. The EPS TMS 23 is configured to cycle coolant within the closed loop system; e.g., draw the coolant from the coolant tank 72, cycle the coolant through the EPS components 19, and return the coolant to the coolant tank 72 where it can once again be cycled through the EPS TMS 23. The nacelle inlet heat exchanger ("EPS HX 80") for the EPS components 19 is disposed in the nacelle structure inlet compartment 48. As shown in FIGS. 1, 4, and 5, both the EPS HX 80 and the TE HX 68 may be disposed in the inlet compartment 48. Alternatively, the EPS HX 80 may be disposed in the inlet compartment 48 and the TE HX 68 may be disposed elsewhere. A bypass valve 82 may be included to control the flow of coolant through the EPS HX 80. For example, the bypass valve 82 may be disposed in a closed configuration wherein all of the coolant flow within the EPS TMS 23 is directed around the EPS HX 80, or in a partially open configuration wherein some portion of the coolant flow within the EPS TMS 23 is directed around the EPS HX 80 and the remainder of the coolant flow passes through the EPS HX 80, or in a fully open configuration wherein all of the coolant flow within the EPS TMS 23 is directed through the EPS HX 80.

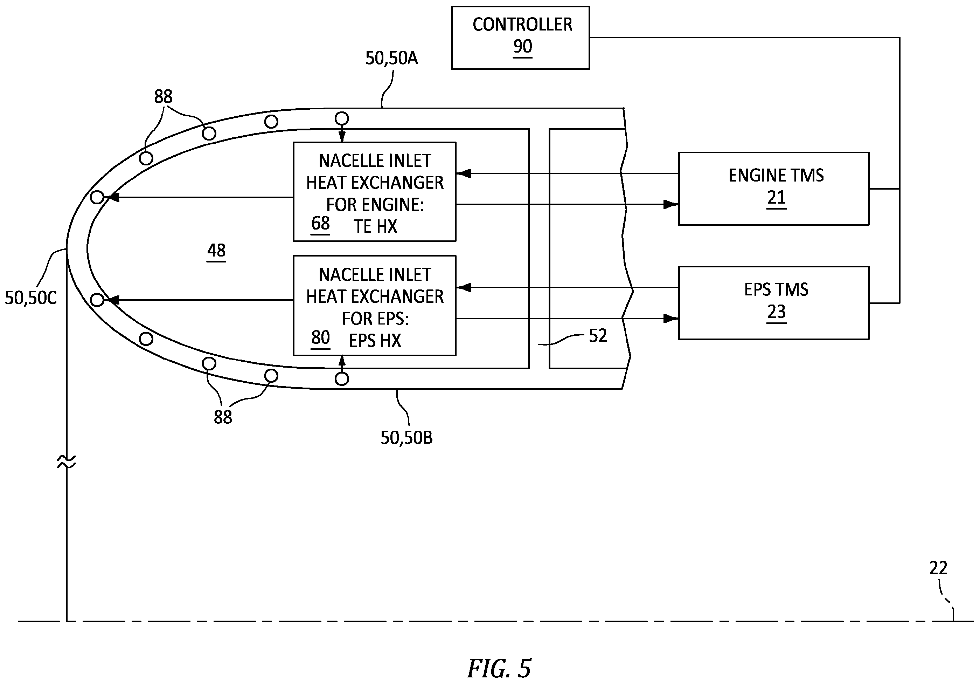

The nacelle inlet heat exchanger (TE HX 68) for the Engine TMS 21 is configured to transfer thermal energy away from engine oil flow passing through the Engine TMS 21, and the nacelle inlet heat exchanger (EPS HX 80) is configured to transfer thermal energy away from coolant passing through the EPS TMS 23. In some embodiments (e.g., see FIG. 4), the nacelle structure inlet compartment 48 may include an ambient air inlet port 84 and an air exhaust port 86 to produce a flow of ambient air through the inlet compartment 48. In those embodiments wherein a flow of ambient air passes through the inlet compartment 48, the heat exchangers (i.e., the TE HX 68 and the EPS HX 80) may have any configuration that permits heat transfer to the ambient air flow. For example, the heat exchangers 68, 80 may include one or more tubes and the tubes may include convective surfaces; e.g., fins. The present disclosure is not limited to any heat exchanger 68, 80 configuration that can be disposed within the inlet compartment 48. In some embodiments, the wall panel 50 that defines the inlet compartment 48 (e.g., the exterior wall panel portion 50A, the interior wall panel portion 50B, the leading edge wall panel portion 50C) may include conduits 88 that allow a fluid to travel therethrough; e.g., see FIG. 5. The conduits 88 illustrated in Fig. 5 may be positioned within the wall panel 50 or otherwise thermally connected to the wall panel 50 to allow thermal energy to transfer from the fluids (e.g., coolant or engine oil), to the conduits 88, then to the wall panel 50 exterior surface, and subsequently to ambient air flow that is engaged with the wall panel 50.

FIGS. 4 and 5 illustrate the nacelle inlet heat exchanger (TE HX 68) for the Engine TMS 21 and the nacelle inlet heat exchanger (EPS HX 80) for the EPS TMS 23 in communication with a controller 90. As will be detailed herein, the controller 90 may be used to coordinate operation of the nacelle inlet heat exchanger (TE HX 68) for the Engine TMS 21 and the nacelle inlet heat exchanger (EPS HX 80) for the EPS TMS 23. The "controller" may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to accomplish the same algorithmically and/or coordination of system components. The controller 90 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 90 may be an independent component or may be integrated within another controller present with the gas turbine engine 20 (or aircraft). For example, the controller 90 may coordinate and/or be in communication with separate system controllers such as a FADEC (Full Authority Digital Engine Control) or an EEC (Electronic Engine Control). The present disclosure is not limited to any particular controller architecture unless specifically stated herein.

Referring to FIG. 4, the Engine TMS 21 is configured to maintain each engine component serviced by the Engine TMS 21 at or below a predetermined threshold temperature. The Engine TMS 21 may vary the flow rate and cooling of the engine oil passing through the Engine TMS 21 to arrive at the desired component temperature. The amount of cooling applied to the engine oil flow within the Engine TMS 21 may be controlled by varying the flow of engine oil through the system heat exchanger and through the nacelle inlet heat exchanger (TE HX 68). In some embodiments, the TE TMS system heat exchanger 64 may be sized such that all of the cooling requirements of the engine components can be accommodated by the system heat exchanger 64 alone during normal operating conditions. In some embodiments, the system heat exchanger 64 and the nacelle inlet heat exchanger (TE HX 68) for the Engine TMS 21 may be sized in combination to accommodate the cooling requirements of the engine components during normal operating conditions. Regardless of whether the cooling requirements of the engine components can be accommodated by the system heat exchanger 64 alone or in combination with the TE HX 68, the Engine TMS 21 may be controlled (e.g., via stored instructions executed by the controller 90) to cause the nacelle inlet heat exchanger (TE HX 68) for the Engine TMS 21 to transfer an amount of thermal energy within the inlet compartment 48 that is adequate to satisfy anti-icing requirements for the inlet compartment 48 alone or in combination with a heater that is in communication with the inlet compartment 48. For example, an electrical heater configured to heat the inlet compartment 48 may be used in combination with the TE HX 68 and /or the EPS HX 80 to satisfy anti-icing requirements for the inlet compartment 48. Electrical heaters are known and the present disclosure is not limited to any particular electrical heater configuration. As another example, a heater configured transfer heat from a flow of compressor bleed air to heat the inlet compartment 48 may be used in combination with the TE HX 68 and /or the EPS HX 80 to satisfy anti-icing requirements for the inlet compartment 48.

Referring to FIG. 5, the EPS TMS 23 is configured to maintain each electric power system component serviced by the EPS TMS 23 at or below a predetermined threshold temperature. The EPS TMS 23 may vary the flow rate and cooling of the coolant passing through the EPS TMS 23 to arrive at the desired component temperature. The amount of cooling applied to the coolant flow within the EPS TMS 23 may be controlled by varying the flow of coolant through the EPS TMS system heat exchanger 78 and through the nacelle inlet heat exchanger (EPS HX 80) for the EPS TMS 23. In some embodiments, the system heat exchanger 78 may be sized such that all of the cooling requirements of the EPS components can be accommodated by the system heat exchanger 78 alone during normal operating conditions. In some embodiments, the system heat exchanger 78 and the nacelle inlet heat exchanger (EPS HX 80) for the EPS TMS 23 may be sized in combination to accommodate the cooling requirements of the EPS components 19 during normal operating conditions. Regardless of whether the cooling requirements of the EPS components 19 can be accommodated by the system heat exchanger 78 alone or in combination with the EPS HX 80, the EPS TMS 23 may be controlled (e.g., via stored instructions executed by the controller 90) to cause the nacelle inlet heat exchanger (EPS HX 80) to release an amount of thermal energy within the inlet compartment 48 that is adequate to satisfy anti-icing requirements for the inlet compartment 48 alone or in combination with electrical heaters in communication with the inlet compartment 48. As stated herein, electrical heaters and / or compressor bleed air heaters may be used in combination with the TE HX 68 and /or the EPS HX 80 to satisfy anti-icing requirements for the inlet compartment 48.

In some embodiments, the operation of the Engine TMS 21 and the EPS TMS 23 may be coordinated (e.g., via stored instructions executed by the controller) so that the amount of thermal energy released within the inlet compartment 48 by the EPS HX 80 and the TE HX 68 is collectively adequate to satisfy anti-icing requirements for the inlet compartment 48 alone or in combination with electrical heaters in communication with the inlet compartment 48, and at the same time satisfying the thermal requirements of the EPS components. In some embodiments, the operation of the system heat exchangers 64, 78 for the Engine TMS 21 and the EPS TMS 23 as well as the EPS HX 80 and the TE HX 68 may be coordinated; e.g., via stored instructions executed by the controller 90.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A hybrid electric propulsion (HEP) system for an aircraft, comprising:
a gas turbine engine that comprises a compressor section, a combustion section, a turbine section, and a spool connecting the compressor section and the turbine section;
wherein the gas turbine engine is disposed in a nacelle having an inlet within an inlet compartment;
an electric power system that comprises an electric motor that is disposable in a drive configuration for producing rotational drive and in a power configuration for producing electrical power;
a first thermal management system (TMS) in communication with the gas turbine engine, wherein the first TMS comprises a first heat exchanger in communication with the inlet compartment;
a second TMS in communication with the electric power system, wherein the second TMS comprises a second heat exchanger in communication with the inlet compartment; and
a controller in communication with the first TMS, the second TMS, and a non-transitory memory storing instructions, which instructions when executed cause the controller to control at least one of the first TMS or the second TMS to transfer thermal energy into the inlet compartment during operation of the HEP system.

2. The HEP system of claim 1, wherein the instructions when executed cause the controller to control both the first TMS and the second TMS to transfer thermal energy into the inlet compartment during operation of the HEP system.

3. The HEP system of claim 1 or 2, wherein during operation of the HEP system the electric motor produces an electric component thermal energy, and the second TMS is configured to transfer the electric component thermal energy to a first fluid, and the second heat exchanger is configured to transfer the electric component thermal energy away from the first fluid.

4. The HEP system of claim 3, wherein the inlet compartment is configured to contain an airflow.

5. The HEP system of claim 4, wherein the nacelle includes an inlet port and an exhaust port, and the inlet port and the exhaust port are configured such that during operation of the HEP system, the airflow enters the inlet compartment through the inlet port and exits the inlet compartment through the exhaust port.

6. The HEP system of claim 5, wherein the second heat exchanger is disposed within the inlet compartment.

7. The HEP system of any preceding claim, wherein the inlet compartment is defined by a wall panel; and
wherein the second heat exchanger includes a plurality of conduits disposed within the wall panel.

8. The HEP system of claim 1, wherein the first TMS is configured to collect a first thermal energy produced by the gas turbine engine during operation of the HEP system and transfer the first thermal energy to a first fluid; and
wherein the second TMS is configured to collect a second thermal energy produced by the electric motor during operation of the HEP system and transfer the second thermal energy to a second fluid;
wherein the instructions when executed cause the controller to control the first TMS and the second TMS.

9. The HEP system of claim 8, wherein the instructions when executed cause the controller to control the first TMS and the second TMS to transfer the first thermal energy and the second thermal energy into the inlet compartment.

10. The HEP system of claim 9, wherein the thermal energy transferred into the inlet compartment is adequate for anti-icing operations.

11. A method of eliminating ice build-up on an inlet of an aircraft engine nacelle that houses a hybrid electric propulsion (HEP) system, wherein the HEP system comprises a gas turbine engine and an electric power system that comprises an electric motor, the method comprising:
providing a first thermal management system (TMS) configured to cool first components within the gas turbine engine, wherein the first TMS includes a first heat exchanger in communication with an inlet compartment of the nacelle;
providing a second TMS to cool second components within the electric power system, including the electric motor, wherein the second TMS includes a second heat exchanger in communication with the inlet compartment;
operating the electric motor in a drive configuration to produce rotational drive for the HEP system, or operating the electric motor in a power configuration to produce electrical power; and
operating at least one of the first TMS or the second TMS to transfer an amount of thermal energy into the inlet compartment that eliminates ice build-up on the inlet of the aircraft engine nacelle.

12. The method of claim 11, wherein the step of operating at least one of the first TMS or the second TMS includes operating both the first TMS and the second TMS to collectively transfer the amount of thermal energy within the inlet compartment that eliminates ice build-up on the inlet of the aircraft engine nacelle.

13. The method of claim 12, further comprising operating the first TMS to cool the first components within the gas turbine engine.

14. The method of claim 13, wherein the first components include bearings, and / or
wherein the step of operating the first TMS to cool the first components within the gas turbine engine includes cycling an engine oil through the first components, wherein, optionally, the step of operating the first TMS includes varying a first volumetric flow of the engine oil through the first heat exchanger.

15. The method of claim 14, further comprising the step of operating the second TMS to cool the second components within the electric power system,
wherein, optionally, the step of operating the second TMS to cool the second components within the electric power system includes cycling a coolant to engage with the second components,
wherein, optionally, the step of operating the second TMS includes varying a second volumetric flow of the coolant through the second heat exchanger.
